# EUROPÄISCHE PATENTSCHRIFT

(11) **EP 2 069 652 B1**
(45) Veröffentlichungstag und Bekanntmachung des Hinweises auf die Patenterteilung: **02.01.2013**
(21) Anmeldenummer: 07729785.1
(22) Anmeldetag: 01.06.2007
(51) Int. Cl.: F16D 27/12, F16D 23/12

(54) **DOPPELKUPPLUNG FÜR EIN DOPPELKUPPLUNGSGETRIEBE**
DUAL CLUTCH FOR A DUAL CLUTCH TRANSMISSION
DOUBLE EMBRAYAGE POUR UNE BOITE DE VITESSES A DOUBLE EMBRAYAGE

(30) Priorität: 25.09.2006 DE 102006045163
(43) Veröffentlichungstag der Anmeldung: 17.06.2009
(73) Patentinhaber: Robert Bosch GmbH, 70442 Stuttgart (DE)
(72) Erfinder: TUMBACK, Stefan, 70469 Stuttgart (DE); SCHLAGMUELLER, Bernhard, 71696 Moeglingen (DE); KAPPENSTEIN, Ulrich, 75438 Knittlingen (DE); GERUNDT, Oliver, 71292 Friolzheim (DE); BAUER, Uwe, 71701 Schwieberdingen (DE); SHEN, Yang, 70372 Stuttgart (DE); SCHOLLER, Carolin, 71672 Marbach Am Neckar (DE)
(86) Internationale Anmeldenummer: PCT/EP2007/055384
(87) Internationale Veröffentlichungsnummer: WO 2008/037513

(56) Entgegenhaltungen:
- DE-A1- 10 313 435
- DE-A1-102004 016 177
- US-A- 2 055 258

## Beschreibung

### Stand der Technik

Die Erfindung betrifft eine Doppelkupplung für ein Doppelkupplungsgetriebe gemäß dem Oberbegriff des Anspruchs 1.

Eine derartige Doppelkupplung ist z.B. aus DE 10313435 A1 bekannt.

Zum Antrieb von Fahrzeugen eingesetzte Doppelkupplungsgetriebe, die zwei Teilgetriebe umfassen, die jeweils eine Hauptkupplung aufweisen, sind aus dem Stand der Technik bekannt. Die erwähnten Hauptkupplungen werden mittels einer hydraulischen Aktuatorik betätigt. Daneben ist es bekannt, Kupplungen mittels elektrischer Steller, wie zum Beispiel Elektromotoren, und einer diesen zugeordneten geeigneten Kinematik zu betätigen. Es wird jeweils eine Kupplung von einem Motor mit einer entsprechend ausgelegten zugeordneten Kinematik unabhängig von der anderen betätigt.

Bei mittels Elektromotoren betätigbaren Kupplungen werden die Elektromotoren nicht nur zum Schließen, sondern auch zum Geschlossenhalten der Kupplungen ständig bestromt. Die Folge ist eine entsprechende Dimensionierung der Elektromotoren sowie die erforderliche Leistungselektronik. Bei elektromotorisch gesteuerten Kupplungen muss gewährleistet sein, dass jede der beiden Kupplungen des Doppelkupplungsgetriebes von je einem Elektromotor unabhängig voneinander vollständig geschlossen werden kann. Dazu muss jeder der beiden vorzuhaltenden Elektromotoren die volle Schließkraft aufbringen, was entsprechend leistungsfähige und damit teure Elektromotoren erforderlich macht. Im Fehlerfall öffnen die beiden Kupplungen, die jeweils elektromotorisch betrieben werden, so dass das Schleppmoment der Verbrennungskraftmaschine nicht mehr zur Verfügung steht und die Motorbremse unwirksam ist. So wird zwar einerseits ein Blockieren des Getriebes verhindert, jedoch andererseits die Motorbremse unwirksam gemacht.

EP 1 178 234 B1 bezieht sich auf eine Kupplungsanordnung. Die Kupplungsanordnung dient der Übertragung eines Drehmomentes von einer Antriebswelle auf eine Abtriebswelle mit einem ersten Kupplungselement und einem zweiten Kupplungselement. Das erste Kupplungselement ist mit der Antriebswelle und das zweite Kupplungselement mit der Abtriebswelle verbunden. Es ist eine Stelleinheit vorgesehen, welche einen Sollwert für ein mit der Kupplung zu übertragendes Drehmoment vorgibt, sowie eine Stelleinrichtung, die eine Rotationsenergie der Antriebswelle zum Einrücken und/oder Ausrücken der Kupplungselemente verwendet. Das Einrücken und/oder Ausrücken der Kupplungselemente erfolgt mittels eines schräg verzahnten Zahnrades. Die Stelleinrichtung ist unmittelbar mit der Antriebswelle verbunden und verwendet deren Rotationsenergie direkt zur Stellung der Kupplungselemente. Dadurch ist die zur Betätigung der Kupplungsanordnung notwendige Stellenergie für die Stelleinrichtung direkt aus dem Antriebsstrang beziehungsweise der Antriebswelle entnehmbar. Für eine Betätigung der Kupplungsanordnung über die Stelleinrichtung wird die aus dem Antriebsstrang entnommene Energie nicht erst zum Antreiben eines Elektromotors eines Elektromagneten oder eines Hydraulikzylinders verwendet, sondern die Energie des Antriebsstrangs wird direkt ohne Umwandlung der Stelleinrichtung zugeführt, um die Kupplungsanordnung zu betätigen.

### Offenbarung der Erfindung

Die Vorteile der Erfindung werden mit der Doppelkupplung gemäß Anspruch 1 erreicht.

Bei Einsatz eines selbsthemmenden Stellantriebs ist es ein Vorteil der erfindungsgemäßen Doppelkupplung, dass eine Bestromung der Stellantriebe, in Abhängigkeit von der Auslegung der Stellantriebe, nur während der Schaltvorgänge sowie in einzelnen Betriebszuständen des Fahrzeugs, d. h. wenn das Fahrzeug unter Volllast betrieben wird, erforderlich ist. Hierzu können die beiden Schieber gemeinsam mit einem ersten elektrischen Stellantrieb verschoben werden. Somit wird durch einen einzigen Stellantrieb ein Umkuppelvorgang gesteuert. In den Endstellungen des elektrischen Stellantriebes ist jeweils eine Kupplung geschlossen und die andere geöffnet. Wenn nun der Stellantrieb betätigt wird, wird von einer Kupplung auf die andere umgekuppelt.

In einer bevorzugten Ausführungsform lassen sich die beiden Schieber gegeneinander mit einem zweiten elektrischen Stellantrieb verschieben. Durch den zweiten elektrischen Stellantrieb wird der Umkuppelablauf korrigiert. Dies kann zum Beispiel aus Komfortgründen erforderlich sein.

In einer Ausführungsform umfasst der erste Stellantrieb eine Spindel, die den gesamten Koppelschieber durch Rotation bewegt. Wenn nun auf einen Schieber durch die Kupplung eine Kraft ausgeübt wird, lässt sich diese Kraft gleichzeitig nutzen, um den anderen Schieber zu bewegen. Hierdurch ist es möglich, eine von der öffnenden Kupplung an den entsprechenden Koppelschieber übertragene Kraft zu nutzen, um die zweite Kupplung zu schließen. Hierdurch wird die benötigte Leistung des elektrischen Stellantriebes, um einen Umkuppelvorgang durchzuführen, reduziert.

Der erste elektrische Stellantrieb, mit dem der gesamte Koppelschieber verschoben werden kann, umfasst vorzugsweise eine Gewindespindel, einen Kettentrieb, einen Zahnradantrieb oder einen Zahnstangenantrieb. Auch ist jeder beliebige weitere andere Antrieb geeignet, mit dem sich der gesamte Koppelschieber bewegen lässt.

Damit die Schieber des Kopplungsschiebers gegenläufig bewegt werden können, umfasst die Spindel, mit der die Schieber mit dem zweiten Stellantrieb angetrieben werden, vorzugsweise ein Linksgewinde und ein Rechtsgewinde. Der eine Schieber wird mit dem Linksgewinde und der andere mit dem Rechtsgewinde bewegt. Alternativ ist es jedoch auch möglich, dass der zweite Stellantrieb zum Bewegen der Schieber, Trapezgewinde, Kugelumlaufspindeln, Seilzüge, Schneckengetriebe oder beliebige andere dem Fachmann bekannte Getriebe umfasst. So ist es zum Beispiel auch möglich, dass die Spindel in einem Schieber gelagert ist und ein Gewinde aufweist, auf dem der andere Schieber bewegt wird.

Erfindungsgemäß sind auf den Schiebern jeweils Rampen ausgebildet, durch welche die Kupplungen betätigt werden. Über die Rampen werden Federhebel angesteuert, mit welchen eine Kupplung geöffnet oder geschlossen wird. Durch die Form der Rampen auf den Schiebern wird der Ablauf des Umkupplungsvorganges vorgegeben. So ist es zum Beispiel möglich, dass die Rampen eine konstante Steigung aufweisen. Bevorzugt ist die Steigung der Rampen jedoch in Form einer Wurzelfunktion ausgebildet. Vorteil der Ausgestaltung der Rampen mit einem Profil mit Wurzelfunktion ist, dass sich hierdurch der geringeren Federkraft einer Kupplung eine größere Steigung und der höheren Federkraft einer Kupplung eine geringere Steigung zuordnen lässt, so dass sich die Verschiebekräfte gegenseitig aufheben.

Neben der Form einer Wurzelfunktion kann die Steigung auch jede weitere Form annehmen. Vorzugsweise lässt sich die Steigung durch eine mathematische Funktion beschreiben. So ist zum Beispiel auch eine Steigung in From einer Logarithmusfunktion, einer Parabel oder einer Hyperbel möglich.

Die Steigungen der Rampen werden vorzugsweise so angepasst, dass bei einem Spannungsausfall der Koppelschieber in eine stabile Position gebracht wird. Zudem ist es möglich, eine Vorspannung durch ein Federelement auszuüben, damit der Schieber in eine stabile Position gezogen werden kann, wenn es zu einem Spannungsausfall kommt.

Damit der Koppelschieber in eine neutrale Position gefahren werden kann, d. h. eine Position, in der beide Kupplungen geöffnet sind, ist es notwendig, dass nicht selbsthemmende Antriebe für die Absolutverschiebung des gesamten Koppelschiebers vorgesehen sind. Nicht selbsthemmende Antriebe erfordern jedoch, dass zur Momentenübertragung eine Kraft auf den Koppelschieber übertragen wird.

Wenn der erste Stellantrieb, welcher den gesamten Koppelschieber bewegt, ohne Selbsthemmung ausgeführt ist, werden die beiden Schieber bei entsprechend ausgelegter Steigung der Rampe im Fall eines Spannungsausfalles so verschoben, dass eine Kupplung geschlossen wird und die andere geöffnet ist. Die Steigung der Rampe muss dabei so ausgelegt sein, dass die Rückstellkraft der sich öffnenden Kupplung größer ist als die Schließkraft, die zum Schließen der anderen Kupplung benötigt wird. Dies lässt sich in einer weiteren Ausführungsform auch durch eine entsprechende Mechanik gewährleisten, mit der die Schieber in eine definierte sichere Position geschoben werden. Dadurch, dass bei Spannungsausfall die Schieber so verschoben werden, dass eine Kupplung geschlossen und die andere geöffnet ist, steht auch bei Spannungsausfall die Motorbremse zur Verfügung. Auch ein Blockieren des Getriebes, wie es auftreten würde, wenn beide Kupplungen geschlossen sind, wird verhindert.

Zum Öffnen und Schließen der Kupplungen werden vorzugsweise Federelemente eingesetzt, wobei jedes Federelement mit einer Seite über ein Axiallager und gegebenenfalls eine Druckhülse gegen eine Rampe und mit der anderen Seite gegen eine Druckplatte wirkt. Als Federelement eignen sich zum Beispiel Federhebel oder Tellerfedern. Mit der Druckplatte wird die jeweilige Kupplungsscheibe gegen einen Kupplungsblock gepresst, der durch die Verbrennungskraftmaschine angetrieben wird. Vorzugsweise ist eine der Druckhülsen in der anderen Druckhülse geführt, wobei die Druckhülsen in axialer Richtung zueinander verschiebbar sind.

Vorzugsweise unterstützt während des Umkupplungsvorganges die Federkraft auf das Federelement der sich öffnenden Kupplung die Bewegung des Federelements der sich schließenden Kupplung. Vorteil hiervon ist es, dass zumindest einer der Stellantriebe mit der zugehörigen Leistungselektronik kleiner dimensioniert werden kann und damit kostengünstiger ist.

Nur beim Anhalten und Anfahren des Kraftfahrzeuges sind beide Kupplungen geöffnet. Sobald das Kraftfahrzeug in Bewegung ist, ist jeweils eine Kupplung geschlossen. Bei einem Schaltvorgang des Doppelkupplungsgetriebes wird in der Regel eine Kupplung geöffnet, während gleichzeitig die andere geschlossen wird.

Vorteil der erfindungsgemäß ausgeführten Doppelkupplung ist, dass der elektrische Stellantrieb, der den Umkuppelvorgang steuert, eine geringere Leistung aufbringen muss. Damit werden die Kosten für den elektrischen Stellantrieb und die benötigte Leistungselektronik gesenkt. Weiterhin entfällt in Abhängigkeit der Auslegung der Steigungen der ersten Rampe beziehungsweise der zweiten Rampe die Notwendigkeit der Dauerbestromung der Motoren. Hierzu werden die Rampen so ausgelegt, dass dann, wenn der erste Stellantrieb beziehungsweise der zweite Stellantrieb nicht bestromt sind, die Schieber so zueinander positioniert sind, dass eine Kupplung geöffnet und die andere geschlossen ist. Dies hat den weiteren Vorteil, dass bei Systemausfall die Motorbremse erhalten bleibt. Eine Notlauffunktion bei Ausfall der Stellantriebe ist möglich.

### Kurze Beschreibung der Zeichnungen

Ausführungsbeispiele der Erfindung sind in den Zeichnungen dargestellt und in der nachfolgenden Beschreibung näher erläutert.

Es zeigen
- Figur 1: eine schematische Darstellung einer erfindungsgemäß ausgebildeten Doppelkupplung,
- Figur 2: eine schematische Darstellung eines Koppelschiebers in Draufsicht,
- Figur 3: eine Schnittdarstellung eines erfindungsgemäß ausgebildeten Koppelschiebers in einer ersten Ausführungsform,
- Figur 4: eine Schnittdarstellung eines erfindungsgemäß ausgebildeten Koppelschiebers in einer zweiten Ausführungsform,
- Figur 5: die Relativverschiebung der beiden Schieber des Koppelschiebers,
- Figur 6: die Verschiebung des gesamten Koppelschiebers,
- Figur 7: den Verschiebeweg eines Koppelschiebers mit wurzelförmigen Rampen.

### Ausführungsformen der Erfindung

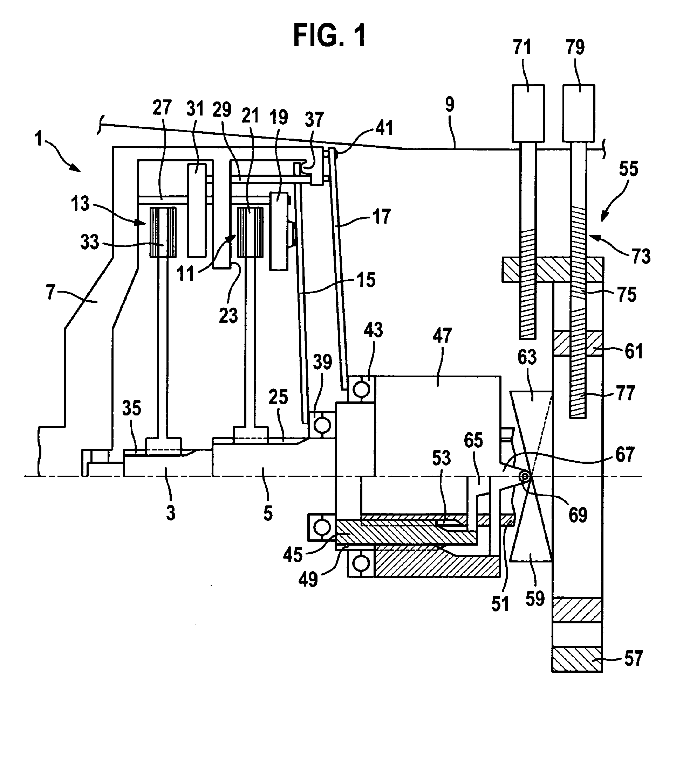

Figur 1 zeigt eine erfindungsgemäß ausgebildete Doppelkupplung für ein Doppelkupplungsgetriebe.

Ein Doppelkupplungsgetriebe 1, zwei Teilgetriebe umfassend, denen je eine Kupplung zugeordnet ist, überträgt das in einer hier nicht dargestellten Verbrennungskraftmaschine erzeugte Drehmoment auf eine Antriebswelle 3 des ersten Teilgetriebes beziehungsweise eine die Antriebswelle 3 umgebende Antriebswelle 5 des zweiten Teilgetriebes. Bei der Verbrennungskraftmaschine handelt es sich in der Regel um eine mehrzylindrige Verbrennungskraftmaschine, zum Beispiel eine selbstzündende oder eine fremdgezündete Verbrennungskraftmaschine. Von der Verbrennungskraftmaschine wird eine Rotationsbewegung an einen Kupplungsblock 7 der Doppelkupplung 1 übertragen. Die Doppelkupplung 1 ist von einem Gehäuse 9 umschlossen.

Innerhalb des Gehäuses 9 sind eine erste Kupplung 11 und eine zweite Kupplung 13 der Doppelkupplung 1 aufgenommen. Die erste Kupplung 11 ist innenliegend angeordnet, während die zweite Kupplung 13 außenliegend angeordnet ist. Beide Kupplungen 11, 13 der Doppelkupplung 1 sind konzentrisch zueinander innerhalb des Gehäuses 9 des Doppelkupplungsgetriebes aufgenommen. Neben den hier dargestellten gleich großen Kupplungen 11, 13 können die Kupplungen 11, 13 auch unterschiedlich groß ausgebildet sein.

Die Kupplungen 11, 13 können zum Beispiel als Trockenkupplungen oder als Nasskupplungen ausgeführt sein. Geeignete Kupplungen 11, 13 sind zum Beispiel Einscheibenkupplungen, Mehrscheibenkupplungen oder Lamellenkupplungen.

Der ersten Kupplung 11 ist ein erstes als Federhebel ausgebildetes Federelement 15 zugeordnet, während die zweite Kupplung 13 von einem zweiten als Federhebel ausgebildeten Federelement 17 beaufschlagt ist. Anstelle der Federhebel 15, 17 können als Federelemente zum Beispiel auch Tellerfedern eingesetzt werden. Um die erste Kupplung 11 zu schließen, übt das erste Federelement 15 eine Druckkraft auf eine erste Druckscheibe 19 aus, die gegen eine Kupplungsscheibe 21 der ersten Kupplung 11 gepresst wird. Mit Hilfe der Druckscheibe 19 wird die Kupplungsscheibe 21 dann gegen eine Fläche 23 gestellt, die am Kupplungsblock 7 ausgebildet ist. Auf diese Weise wird die Rotationsbewegung des Kupplungsblocks 7 an die Kupplungsscheibe 21 übertragen. Damit die Kupplungsscheibe 21 gegen die Fläche 23 gestellt werden kann, ist die Kupplungsscheibe 21 axial verschiebbar auf der Antriebswelle 5 des zweiten Teilgetriebes gelagert. In der in Figur 1 dargestellten Ausführungsform ist die Kupplungsscheibe 21 hierzu in axial ausgerichteten Nuten 25 geführt. Die erste Druckscheibe 19 wird an Führungsstiften 27 geführt. Die Führungsstifte 27 sind mit dem Kupplungsblock 7 verbunden. Das bedeutet, dass die erste Druckscheibe 19 und auch das erste Federelement 15 mit der gleichen Geschwindigkeit rotieren, mit der auch der Kupplungsblock 7 rotiert.

Um die zweite Kupplung 13 zu schließen, wirkt eine Federkraft des zweiten Federelements 17 auf einen Stift 29, der mit einer zweiten Druckscheibe 31 verbunden ist. Die zweite Druckscheibe 31 wird so gegen eine Kupplungsscheibe 33 der zweiten Kupplung 13 gedrückt und drückt so die Kupplungsscheibe 33 gegen den Kupplungsblock 7. Auch die zweite Kupplungsscheibe 33 ist axial verschiebbar gelagert. Hierzu sind in der Antriebswelle 3 des ersten Teilgetriebes Nuten 35 ausgebildet, in denen die Kupplungsscheibe 33 verschoben werden kann. In der in Figur 1 dargestellten Ausführungsform wird so durch die erste Kupplung 11 bei geschlossener Kupplung 11 das Drehmoment des Kupplungsblocks 7 an die Antriebswelle 5 des zweiten Teilgetriebes übertragen. Bei geschlossener zweiter Kupplung 13 wird das Drehmoment des Kupplungsblocks 7 an die Antriebswelle 3 des ersten Teilgetriebes übertragen.

Damit von den Federelementen 15, 17 eine Federkraft an die Druckscheiben 19, 31 übertragen werden kann, ist das erste Federelement 15 mit einer Seite an einem ersten Drehpunkt 37 am Kupplungsblock 7 und mit der anderen Seite an einem ersten Drucklager 39 gelagert. Entsprechend ist das zweite Federelement 17 an einem zweiten Drehpunkt 41 am Kupplungsblock 7 und mit der anderen Seite an einem zweiten Drucklager 43 gelagert. Um eine gleichmäßige Kraftverteilung auf die Kupplungsscheiben 21, 33 zu erzielen, sind jeder Kupplungsscheibe vorzugsweise mehrere Federelemente 15, 17 zugeordnet.

Gemäß der in Figur 1 dargestellten Ausführungsform ist das erste Drucklager 39 gegen eine erste Druckhülse 45 und das zweite Drucklager 43 gegen eine zweite Druckhülse 47 gestellt. Die Drucklager 39, 41 sind jeweils als Axiallager ausgeführt, da sich die Federelemente 15, 17 mit der Drehzahl des Kupplungsblocks 7 bewegen, wohingegen die Druckhülsen 45, 47 stationär sind und keine Rotationsbewegung ausführen.

Anstelle der Druckhülsen 45, 47 ist es auch möglich, Einrücklager zu verwenden, die über Hebel am Kupplungsgehäuse angelenkt sind. Die Einrücklager lassen sich so in axialer Richtung bezüglich der Doppelkupplung bewegen, eine radiale Bewegung oder Bewegung in Umfangsrichtung wird durch die Hebel verhindert. Gegenüber der Verwendung von Druckhülsen 45, 47 lässt sich durch die Einrücklager Bauraum einsparen.

Um die erste Kupplung 11 zu schließen, bewegt sich die erste Druckhülse 45 in Richtung des Kupplungsblocks 7. Hierdurch wird auch das an der ersten Druckhülse 45 stehende erste Drucklager 39 axial in diese Richtung bewegt und übt so eine Kraft auf das erste Federelement 15 aus. Das erste Federelement 15 drückt auf die Druckscheibe 19 und stellt diese so gegen die Fläche 23 am Kupplungsblock 7. Entsprechend wird, wenn die zweite Kupplung 13 geschlossen werden soll, die zweite Druckhülse 47 axial in Richtung des Kupplungsblocks 7 bewegt. Dies führt zu einer Bewegung des zweiten Drucklagers 43 ebenfalls in Richtung des Kupplungsblocks 7, wodurch eine Kraft auf das zweite Federelement 17 wirkt. Das zweite Federelement 17 drückt gegen den Stift 29, der mit der zweiten Druckscheibe 31 verbunden ist, und presst so die zweite Druckscheibe 31 gegen die Kupplungsscheibe 33 der zweiten Kupplung 13. Die Kupplungsscheibe 33 der zweiten Kupplung 13 wird somit gegen den Kupplungsblock 7 gestellt. Um eine stabile Führung der zweiten Druckscheibe 31 zu erzielen, ist es möglich, dass diese ebenfalls über den Führungsstift 27 geführt wird.

Eine Radialbewegung der ersten Druckhülse 45 und der zweiten Druckhülse 47 wird dadurch vermieden, dass die Druckhülsen 45, 47 ineinander geführt sind. Hierzu ist an der ersten Druckhülse 45 mindestens eine Nut 49 ausgebildet, in der die zweite Druckhülse 47 axial verschiebbar aufgenommen ist. Eine Rotationsbewegung der ersten Druckhülse 45 wird dadurch vermieden, dass diese in einer stationären Welle 51 geführt ist. In der stationären Welle 51 ist hierzu ebenfalls vorzugsweise mindestens eine in axialer Richtung verlaufende Nut 53 ausgebildet, in der die erste Druckhülse 45 geführt ist.

Um die erste Druckhülse 45 und die zweite Druckhülse 47 in axialer Richtung verschieben zu können, umfasst die erfindungsgemäß ausgebildete Doppelkupplung 1 einen Koppelschieber 55. Der Koppelschieber 55 umfasst einen ersten Schieber 57, an dem eine erste Rampe 59 ausgebildet ist, und einen zweiten Schieber 61, der mit einer zweiten Rampe 63 versehen ist.

Um die erste Druckhülse 45 und die zweite Druckhülse 47 nun in axiale Richtung bewegen zu können, ist an der ersten Druckhülse 45 ein erster Fortsatz 65 ausgebildet, der gegen die erste Rampe 59 gestellt ist, und an der zweiten Druckhülse 47 ein zweiter Fortsatz 67 ausgebildet, der gegen die zweite Rampe 63 gestellt ist. Zur Verschleißminimierung ist an den Fortsätzen 65, 67 jeweils eine Rolle 69 ausgebildet, die auf der ersten Rampe 59 beziehungsweise zweiten Rampe 63 läuft. Durch eine Bewegung in radialer Richtung des ersten Schiebers 57 beziehungsweise des zweiten Schiebers 61 bewegen sich die erste Druckhülse 45 beziehungsweise die zweite Druckhülse 47 entlang der ersten Rampe 59 beziehungsweise der zweiten Rampe 63. Hierdurch wird die in radialer Richtung ausgeführte Bewegung der Schieber 57, 61 in eine axiale Bewegung der Druckhülsen 45, 47 umgewandelt.

Damit jeweils eine Kupplung 11, 13 öffnet, während die andere Kupplung 11, 13 gleichzeitig schließt, sind die Steigungen der Rampen 59, 63 in entgegengesetzter Richtung ausgeführt. Werden die Schieber 57, 61 in die gleiche Richtung verschoben, so wird die eine der beiden Druckhülsen 45, 57 in Richtung des Kupplungsblocks 7 bewegt, während die zweite der beiden Druckhülsen 45, 47 vom Kupplungsblock 7 wegbewegt wird. Eine der beiden Kupplungen 11, 13 schließt, während die andere der beiden Kupplungen 11, 13 geöffnet wird.

Zum Umkuppeln durch paralleles Verschieben der Schieber 57, 61 ist ein erster Stellantrieb 71 vorgesehen. Mit dem ersten Stellantrieb 71 lässt sich der gesamte Koppelschieber 55 in radialer Richtung bewegen.

Über das Federelement 15, 17 der geschlossenen Kupplung 11, 13 wirkt eine Druckkraft auf das Drucklager 39, 43 und damit auf die Druckhülse 45, 47. Durch diese Druckkraft wird die Öffnungsbewegung der Kupplung 11, 13 unterstützt. Gleichzeitig erleichtert die Druckkraft die Bewegung des Schiebers 57, 61. Der erste Stellantrieb 71 kann somit kleiner dimensioniert werden.

Um den Umkoppelablauf gegebenenfalls korrigieren zu können, ist ein zweiter Stellantrieb 79 vorgesehen, mit dem die Schieber 57, 61 gegenläufig bewegt werden können.

Eine gleichmäßige Bewegung der Schieber 57, 61 wird dadurch erzielt, dass diese mit einem gemeinsamen Stellantrieb 79 angesteuert werden. Eine gegenläufige Bewegung der Schieber 57, 61 wird dadurch erzielt, dass der zweite Stellantrieb 79 eine Spindel 73 umfasst, an der ein Rechtsgewinde 75 und ein Linksgewinde 77 ausgebildet ist. Der erste Schieber 57 läuft dabei auf dem Rechtsgewinde 75 und der zweite Schieber 61 auf dem Linksgewinde 77. Alternativ ist es selbstverständlich auch möglich, dass der erste Schieber 57 auf dem Linksgewinde 77 und der zweite Schieber 61 auf dem Rechtsgewinde 55 läuft. Bei einer Rotationsbewegung der Spindel 73 bewegt sich so der erste Schieber 57 in eine Richtung, während der zweite Schieber 61 in die entgegengesetzte Richtung bewegt wird. Anstelle der ersten Spindel 73 mit Links- und Rechtsgewinde kann die Spindel alternativ zum Beispiel ein Trapezgewinde, Kugelumlaufspindeln, Seilzüge oder Schneckengetriebe umfassen. Auch kann die Spindel 73 in einem der Schieber 57, 61 gelagert sein und ein Gewinde aufweisen, auf dem der andere der Schieber 57, 61 bewegt wird.

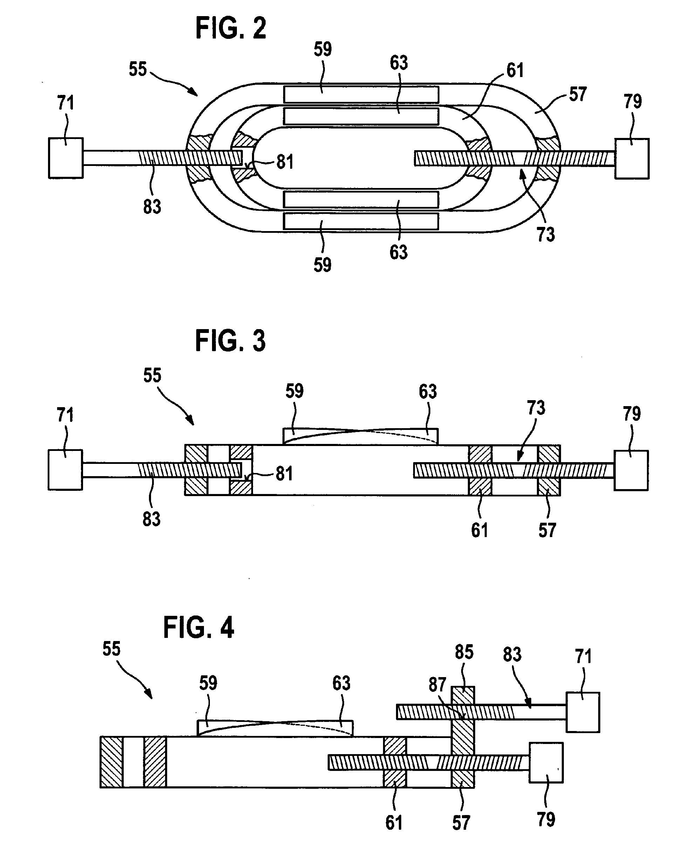

Figur 2 zeigt einen erfindungsgemäß ausgebildeten Koppelschieber 55 in Draufsicht.

Der erfindungsgemäß ausgebildete Koppelschieber 55 umfasst den ersten Schieber 57 und den zweiten Schieber 61. Die Schieber sind in der hier dargestellten Ausführungsform jeweils oval ausgeführt, so dass jeder Schieber zwei Rampen 59 beziehungsweise 63 aufweist. Durch die zwei Rampen wird vermieden, dass die Druckhülsen 43, 45 verkanten. Neben der hier dargestellten ovalen Form können die Schieber 57, 61 selbstverständlich jede weitere, dem Fachmann bekannte Form annehmen, bei welcher jeweils mindestens zwei Rampen 59, 63 auf einem der Schieber 57, 61 parallel nebeneinander ausgebildet werden können, wodurch ein Verkanten der Druckhülsen 45, 47 bei Bewegung vermieden wird. In der hier dargestellten Draufsicht ist der erste Stellantrieb 71, mit welchem die Schieber 57, 61 zusammen parallel verschoben werden können, dem zweiten Stellantrieb 79 gegenüber angeordnet. Damit durch den ersten Stellantrieb 71 eine Bewegung des gesamten Koppelschiebers 55 möglich ist, ohne das entgegengerichtete Verschieben der Schieber 57, 61 zu behindern, ist im zweiten Schieber 61 eine Bohrung 81 ausgebildet, durch welche eine Spindel 83 geführt ist, die mit dem ersten Stellantrieb 71 verbunden ist. Durch Rotation der zweiten Spindel 83 wird der gesamte Koppelschieber 55 samt dem zweiten Stellantrieb 79 bewegt. Anstelle der Spindel 83 ist es auch möglich, jede beliebige andere, dem Fachmann bekannte Antriebsvorrichtung vorzusehen, mit der eine radiale Verschiebung des gesamten Koppelschiebers 55 möglich ist. Derartige Antriebe sind zum Beispiel Kettentriebe, Zahnräder, Zahnstangen usw.

Figur 3 zeigt eine Schnittdarstellung eines erfindungsgemäß ausgebildeten Koppelschiebers 55 gemäß Figur 2.

Figur 3 ist zu entnehmen, wie die erste Rampe 59 und die zweite Rampe 63, die auf den Schiebern 57 beziehungsweise 61 aufgenommen sind, ausgebildet sind. Anders als bei der in Figur 1 dargestellten Ausführungsform, bei denen die Steigung der Schieber 59 beziehungsweise 63 linear verläuft, haben die Rampen 59 und 63 bei der in Figur 3 dargestellten Ausführungsform eine Steigung in Form einer Wurzelfunktion. Vorteil dieser Form ist es, dass der geringeren Federkraft des Federelements 15 beziehungsweise 17, die bei geöffneter Kupplung auf die Rampe 59 beziehungsweise 63 wirkt, eine größere Steigung zugeordnet ist und der höheren Kupplungs-Federkraft der Federelemente 15, 17 bei geschlossener Kupplung eine geringere Steigung zugeordnet ist, so dass sich die Verschiebekräfte gegenseitig aufheben. Durch den ersten Stellantrieb 71 braucht somit nur noch eine sehr geringe Kraft zum Verschieben der Schieber 57, 61 aufgebracht werden.

Figur 4 zeigt einen erfindungsgemäß ausgebildeten Koppelschieber 55 in einer zweiten Ausführungsform.

Bei der in Figur 4 dargestellten Ausführungsform ist der erste Stellantrieb 71, mit dem der gesamte Koppelschieber 55 samt dem zweiten Stellantrieb 79 bewegt wird, nicht gegenüber dem zweiten Stellantrieb 79 angeordnet, sondern parallel zu diesem.

Hierzu ist am ersten Schieber 57 ein Ansatz 85 ausgebildet, in welchem eine Bohrung 87 mit Innengewinde ausgebildet ist, in dem die zweite Spindel 83 geführt ist.

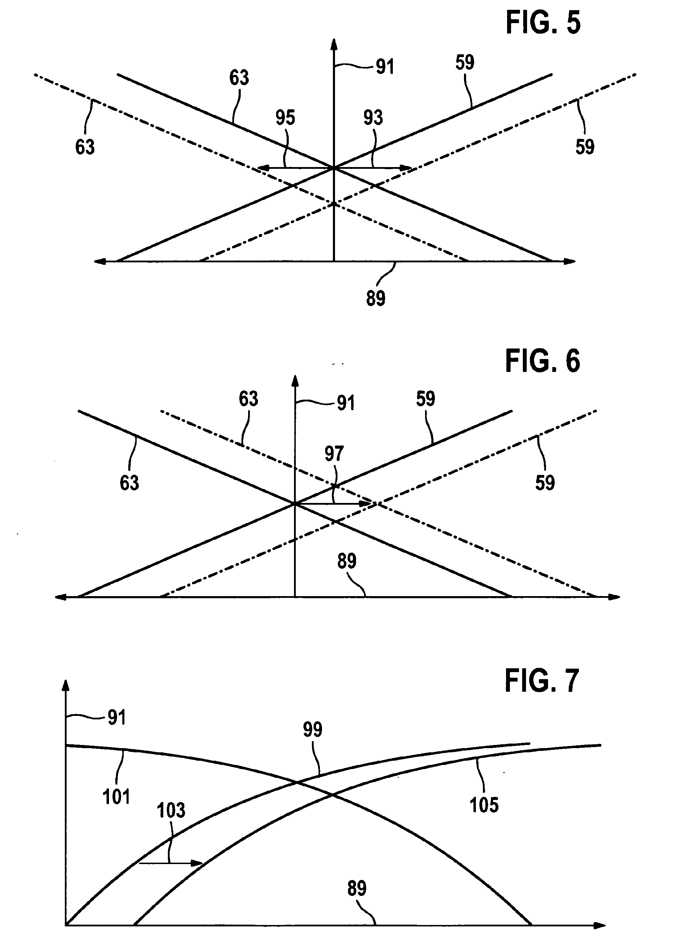

In Figur 5 ist die Relativverschiebung der beiden Schieber 57, 59 des Koppelschiebers 55 dargestellt. Auf der x-Achse 89 ist dabei die Radialbewegung der Schieber 57, 59 dargestellt und auf der y-Achse 91 die Steigung der Rampen 59 und 63. Mit durchgezogener Linie ist die Position der Schieber 57, 59 zu einem ersten Zeitpunkt dargestellt. Die beiden Schieber 57, 59 werden nun mit dem zweiten Stellantrieb 79 gegeneinander verschoben. Hierdurch bewegt sich der erste Schieber 57 wie mit dem Pfeil 93 dargestellt in die eine Richtung, während sich der zweite Schieber 61 wie mit Pfeil 95 dargestellt in die entgegengesetzte Richtung bewegt. Die Positionen der Schieber 57, 61 zu einem zweiten Zeitpunkt sind strichpunktiert dargestellt. Die Form der Rampen 59, 63 ist bei der in Figur 5 dargestellten Ausführungsform linear ansteigend.

In Figur 6 ist eine Verschiebung des gesamten Koppelschiebers 55, durch die ein Umkuppelvorgang erfolgt, dargestellt. Die Schieber 57, 61 befinden sich zunächst in einer Ausgangsposition, bei der beide Kopplungen 11, 13 geöffnet und die andere geschlossen ist. Durch Betätigung des ersten Stellantriebes 71 wird der gesamte Koppelschieber 55 verschoben. Dies zeigt der mit Bezugszeichen 97 bezeichnete Pfeil. Auch bei der in Figur 6 dargestellten Ausführungsform ist auf der x-Achse die Bewegung der Schieber 57, 61 dargestellt, während auf der y-Achse die Steigung der Rampen 59, 63 dargestellt ist. Dabei ist mit durchgezogenen Linien die Ausgangsposition des Koppelschiebers 55 und mit strichpunktierter Linie die Position des Koppelschiebers 55 nach der Verschiebung dargestellt. Wie Figur 6 zu entnehmen ist, ändert sich bei einer Verschiebung des gesamten Koppelschiebers 55 die Position der Rampen 59, 63 zueinander nicht. In der zweiten Position ist nun die Kupplung 11, 13, die zunächst geöffnet war, geschlossen und die andere geöffnet.

In Figur 7 ist der Weg, welcher von den Druckhülsen 45, 47 zurückgelegt wird, in Abhängigkeit vom Drehwinkel des ersten Stellantriebs 71 dargestellt. Der Drehwinkel des ersten Stellantriebs 71 ist dabei auf der x-Achse 89 und der Weg der Druckhülsen 45, 47 auf der y-Achse 91 aufgetragen. Durch die Drehbewegung des ersten Stellantriebes 71 wird die erste Spindel 73 in Rotation versetzt. Mit zunehmender Rotation der Spindel 73 werden der erste Schieber 57 und der zweite Schieber 61 parallel zueinander verschoben. Zu Beginn ist die erste Kupplung 11 geöffnet und die zweite Kupplung 13 geschlossen. Der Weg der ersten Druckhülse 45, über welche die erste Kupplung 11 geöffnet und geschlossen wird, ist mit Bezugszeichen 99 bezeichnet. Der Weg der zweiten Druckhülse 47, mit der die zweite Kupplung 13 geöffnet oder geschlossen wird, ist mit Bezugszeichen 101 bezeichnet. Durch die Rotationsbewegung des ersten Stellantriebes 71 werden der erste Schieber 57 und der zweite Schieber 61 parallel zueinander verschoben. Dies führt aufgrund der auf dem ersten Schieber 57 und dem zweiten Schieber 61 ausgebildeten Rampen 59, 63 zu einer Bewegung der ersten Druckhülse 45 beziehungsweise zweiten Druckhülse 47. Durch die Bewegung wird die zweite Kupplung 13, welche zu Beginn geschlossen ist, geöffnet, während die erste Kupplung 11, die zu Beginn geöffnet ist, geschlossen wird. Der Weg der Druckhülsen 43, 45 ist dabei abhängig von der Steigung der Rampen 59, 63. Um einen Weg zu erzielen, wie er in Figur 7 dargestellt ist, sind die Rampen 59, 63 mit einer wurzelfunktionsförmigen Steigung ausgebildet. Neben der wurzelförmigen Steigung kann die Rampe auch jede weitere Steigung, die durch eine mathematische Funktion dargestellt werden kann, annehmen. So ist es zum Beispiel auch möglich, dass die Steigung in Form einer Logarithmusfunktion, einer Hyperbel oder einer Parabel ausgebildet ist. Dies führt dazu, dass die Kupplung, die geschlossen wird, zunächst bei wenig Bewegung des ersten Stellantriebes 71 einen großen Weg zurücklegt und mit zunehmender Schließung der Kupplung der Weg, der mit der Bewegung des Stellantriebes 71 zurückgelegt wird, kleiner wird. Entsprechend wird bei der Kupplung, die geöffnet wird, zunächst ein kleiner Weg zurückgelegt, und je weiter die Kupplung geöffnet ist, desto größer ist der Weg, der bei gleichem Weg des Stellantriebes 71 zurückgelegt wird. Bei Betätigung des zweiten Stellantriebes 79 werden die Schieber 57, 59 gegenläufig zueinander bewegt. Eine derartige Verschiebung ist exemplarisch für die erste Druckhülse 45 dargestellt. Der Verschiebeweg ist mit dem Pfeil 103 bezeichnet. Die sich dadurch ergebende Kurve des Betätigungsweges der ersten Druckhülse 45 ist mit Bezugszeichen 105 bezeichnet.

## Patentansprüche

1. Doppelkupplung für ein Doppelkupplungsgetriebe zum Übertragen eines Drehmomentes von einer Antriebswelle an mindestens eine Abtriebswelle, eine erste Kupplung (11), eine zweite Kupplung (13) sowie eine elektrische Betätigungseinrichtung umfassend, wobei die Betätigungseinrichtung einen ersten Schieber (57) und einen zweiten Schieber (61) umfasst, wobei der erste Schieber (57) auf die erste Kupplung (11) und der zweite Schieber (61) auf die zweite Kupplung (13) wirkt und die beiden Schieber (57, 61) so bewegbar sind, dass durch das Verschieben der Schieber (57, 61) ein Umkupplungsvorgang gesteuert wird, wobei auf den Schiebern (57, 61) jeweils Rampen (59, 63) ausgebildet sind, durch welche die Kupplungen (11, 13) betätigt werden, wobei die Betätigungseinrichtung einen den ersten Schieber (57) und den zweiten Schieber (61) aufweisenden Koppelschieber (55) umfasst, **dadurch gekennzeichnet, dass** die Steigungen der an dem ersten Schieber (57) und dem zweiten Schieber (61) jeweils ausgebildeten Rampen (59, 63) in entgegengesetzter Richtung ausgeführt sind, so dass bei einer Verschiebung des gesamten Koppelschiebers (55) mit einem ersten elektrischen Stellantrieb (71) ein Umkupplungsvorgang gesteuert wird.

2. Doppelkupplung gemäß Anspruch 1, **dadurch gekennzeichnet, dass** die beiden Schieber (57, 61) mit einem zweiten elektrischen Stellantrieb (79) gegeneinander verschoben werden können.

3. Doppelkupplung nach Anspruch 2, **dadurch gekennzeichnet, dass** der zweite Stellantrieb (79) eine Spindel (73) umfasst, welche den ersten Schieber (57) und den zweiten Schieber (61) gegeneinander bewegt.

4. Doppelkupplung nach Anspruch 3, **dadurch gekennzeichnet, dass** die Spindel (73) ein Rechtsgewinde (75) und ein Linksgewinde (77), Trapezgewinde, Kugelumlaufspindeln, Seilzüge oder Schneckengetriebe umfasst oder dass die Spindel in einem der Schieber (57, 61) gelagert ist und ein Gewinde aufweist, auf dem der andere der Schieber (57, 61) bewegt wird.

5. Doppelkupplung nach Anspruch 4, **dadurch gekennzeichnet, dass** einer der beiden Schieber (57, 61) mit dem Linksgewinde (77) und der andere der beiden Schieber (57, 61) mit dem Rechtsgewinde (75) bewegt wird.

6. Doppelkupplung nach einem der Ansprüche 1 bis 5, **dadurch gekennzeichnet, dass** der erste elektrische Stellantrieb (71) mindestens eine Gewindespindel, einen Kettentrieb, einen Zahnradantrieb oder einen Zahnstangenantrieb umfasst, um den gesamten Koppelschieber (55) zu verschieben.

7. Doppelkupplung nach Anspruch 1, **dadurch gekennzeichnet, dass** die Rampen (59, 63) eine konstante Steigung aufweisen.

8. Doppelkupplung nach Anspruch 1, **dadurch gekennzeichnet, dass** die Rampen (59, 63) eine Steigung in Form einer Wurzelfunktion oder Logarithmusfunktion aufweisen.

9. Doppelkupplung nach einem der Ansprüche 1 bis 8, **dadurch gekennzeichnet, dass** zum Öffnen und Schließen der Kupplungen (11,13) Federelement (15, 17) eingesetzt werden, wobei jedes Federelement (15, 17) mit einer Seite über ein als Axiallager ausgebildetes Drucklager (39, 41) und gegebenenfalls eine Druckhülse (45, 47) oder ein am Kupplungsgehäuse angelenktes Lager gegen eine der Rampen (59, 63) und mit der anderen Seite gegen eine Druckscheibe (19, 31) wirkt.

10. Doppelkupplung nach Anspruch 9, **dadurch gekennzeichnet, dass** eine der Druckhülsen (45) in der anderen Druckhülse (47) geführt ist und die Druckhülsen (45, 47) in axialer Richtung zueinander verschiebbar sind.

11. Doppelkupplung nach Anspruch 9 oder 10, **dadurch gekennzeichnet, dass** während des Umkupplungsvorganges die Federkraft auf den Federhebel (15, 17) der sich öffnenden Kupplung (11, 13) die Bewegung des Federhebels (15, 17) der sich schließenden Kupplung (11, 13) unterstützt.

## Claims

1. Dual clutch for a dual clutch transmission for transmitting a torque from a drive shaft to at least one output shaft, comprising a first clutch (11), a second clutch (13) and an electric actuating device, the actuating device comprising a first slide (57) and a second slide (61), the first slide (57) acting on the first clutch (11) and the second slide (61) acting on the second clutch (13), and it being possible for the two slides (57, 61) to be moved in such a way that a clutch changeover operation is controlled by the displacement of the slides (57, 61), ramps (59, 63) being formed in each case on the slides (57, 61), by way of which ramps (59, 63) the clutches (11, 13) are actuated, the actuating device comprising a coupling slide (55) which has the first slide (57) and the second slide (61), **characterized in that** the gradients of the ramps (59, 63) which are formed in each case on the first slide (57) and the second slide (61) are configured in opposite directions, with the result that a clutch changeover operation is controlled in the case of a displacement of the entire coupling slide (55) by way of a first electric actuating drive (71).

2. Dual clutch according to Claim 1, **characterized in that** the two slides (57, 61) can be displaced with respect to one another by way of a second electric actuating drive (79).

3. Dual clutch according to Claim 2, **characterized in that** the second actuating drive (79) comprises a spindle (73) which moves the first slide (57) and the second slide (61) with respect to one another.

4. Dual clutch according to Claim 3, **characterized in that** the spindle (73) comprises a right-hand thread (75) and a left-hand thread (77), trapezoidal threads, recirculating ball spindles, cable pulls or worm gear mechanisms, or **in that** the spindle is mounted in one of the slides (57, 61) and has a thread, on which the other of the slides (57, 61) is moved.

5. Dual clutch according to Claim 4, **characterized in that** one of the two slides (57, 61) is moved by way of the left-hand thread (77) and the other of the two slides (57, 61) is moved by way of the right-hand thread (75).

6. Dual clutch according to one of Claims 1 to 5, **characterized in that** the first electric actuating drive (71) comprises at least one threaded spindle, one chain drive, one gearwheel drive or one rack drive, in order to displace the entire coupling slide (55).

7. Dual clutch according to Claim 1, **characterized in that** the ramps (59, 63) have a constant gradient.

8. Dual clutch according to Claim 1, **characterized in that** the ramps (59, 63) have a gradient in the form of a root function or logarithm function.

9. Dual clutch according to one of Claims 1 to 8, **characterized in that** spring elements (15, 17) are used for opening and closing the clutches (11, 13), each spring element (15, 17) acting with one side against one of the ramps (59, 63), via a thrust bearing (39, 41) which is configured as an axial bearing and optionally a thrust sleeve (45, 47) or a bearing which is articulated on the clutch housing, and with the other side against a thrust washer (19, 31).

10. Dual clutch according to Claim 9, **characterized in that** one of the thrust sleeves (45) is guided in the other thrust sleeve (47), and the thrust sleeves (45, 47) can be displaced in the axial direction with respect to one another.

11. Dual clutch according to Claim 9 or 10, **characterized in that**, during the clutch changeover operation, the spring force on the spring lever (15, 17) of the opening clutch (11, 13) assists the movement of the spring lever (15, 17) of the closing clutch (11, 13).

## Revendications

1. Double embrayage pour une boîte de vitesses à double embrayage pour le transfert d'un couple d'un arbre d'entraînement à au moins un arbre de sortie, comprenant un premier embrayage (11), un deuxième embrayage (13) ainsi qu'un dispositif d'actionnement électrique, le dispositif d'actionnement comprenant un premier coulisseau (57) et un deuxième coulisseau (61), le premier coulisseau (57) agissant sur le premier embrayage (11) et le deuxième coulisseau (61) agissant sur le deuxième embrayage (13) et les deux coulisseaux (57, 61) étant déplaçables de telle sorte que le déplacement des coulisseaux (57, 61) commande une opération de transfert, des rampes (59, 63) étant respectivement réalisées sur les coulisseaux (57, 61), lesquelles actionnent les embrayages (11, 13), le dispositif d'actionnement comprenant un coulisseau d'accouplement (55) présentant le premier coulisseau (57) et le deuxième coulisseau (61), **caractérisé en ce que** les pentes des rampes (59, 63) réalisées respectivement sur le premier coulisseau (57) et sur le deuxième coulisseau (61) sont réalisées dans des directions opposées de telle sorte que dans le cas d'un déplacement du coulisseau d'accouplement complet (55) avec un entraînement de commande électrique (71), une opération de transfert soit commandée.

2. Double embrayage selon la revendication 1, **caractérisé en ce que** les deux coulisseaux (57, 61) peuvent être déplacés l'un par rapport à l'autre avec un deuxième entraînement de commande électrique (79).

3. Double embrayage selon la revendication 2, **caractérisé en ce que** le deuxième entraînement de commande (79) comprend une broche (73) qui déplace l'un par rapport à l'autre le premier coulisseau (57) et le deuxième coulisseau (61).

4. Double embrayage selon la revendication 3, **caractérisé en ce que** la broche (73) comprend un filetage à droite (75) et un filetage à gauche (77), un filetage trapézoïdal, des vis à billes, des câbles Bowden ou des engrenages à vis sans fin ou **en ce que** la broche est montée dans l'un des coulisseaux (57, 61) et présente un filetage sur lequel est déplacé l'autre coulisseau (57, 61).

5. Double embrayage selon la revendication 4, **caractérisé en ce que** l'un des deux coulisseaux (57, 61) est déplacé avec le filetage à gauche (77) et l'autre des deux coulisseaux (57, 61) est déplacé avec le filetage à droite (75).

6. Double embrayage selon l'une quelconque des revendications 1 à 5, **caractérisé en ce que** le premier entraînement de commande électrique (71) comprend au moins une broche filetée, un entraînement à chaîne, un entraînement à roue dentée ou un entraînement à crémaillère, afin de déplacer le coulisseau d'accouplement complet (55).

7. Double embrayage selon la revendication 1, **caractérisé en ce que** les rampes (59, 63) présentent une pente constante.

8. Double embrayage selon la revendication 1, **caractérisé en ce que** les rampes (59, 63) présentent une pente en forme de fonction de racine carrée ou de fonction logarithmique.

9. Double embrayage selon l'une quelconque des revendications 1 à 8, **caractérisé en ce que** pour l'ouverture et la fermeture des embrayages (11, 13) on utilise des éléments de ressort (15, 17), chaque élément de ressort (15, 17) agissant avec un côté par le biais d'un palier de pression (39, 41) réalisé sous forme de palier axial et éventuellement par le biais d'une douille de pression (45, 47) ou d'un palier articulé au boîtier d'embrayage, contre l'une des rampes (59, 63) et avec l'autre côté contre un disque de pression (19, 31).

10. Double embrayage selon la revendication 9, **caractérisé en ce que** l'une des douilles de pression (45) est guidée dans l'autre douille de pression (47) et les douilles de pression (45, 47) peuvent être déplacées l'une par rapport à l'autre dans la direction axiale.

11. Double embrayage selon la revendication 9 ou 10, **caractérisé en ce que** pendant l'opération de transfert, la force de ressort sur le levier à ressort (15, 17) de l'embrayage s'ouvrant (11, 13) supporte le mouvement du levier à ressort (15, 17) de l'embrayage se fermant (11, 13).
